# EUROPÄISCHE PATENTSCHRIFT

(11) **EP 2 037 785 B1**
(45) Veröffentlichungstag und Bekanntmachung des Hinweises auf die Patenterteilung: **26.05.2010**
(21) Anmeldenummer: 07730128.1
(22) Anmeldetag: 13.06.2007
(51) Int. Cl.: A47J 43/07

(54) **HANDRÜHRER MIT SICHERHEITSVERRIEGELUNG**
HAND MIXER COMPRISING A SAFETY LOCK SYSTEM
BATTEUR À MAIN À VERROUILLAGE DE SÉCURITÉ

(30) Priorität: 30.06.2006 DE 102006030222
(43) Veröffentlichungstag der Anmeldung: 25.03.2009
(73) Patentinhaber: BSH Bosch und Siemens Hausgeräte GmbH, 81739 München (DE)
(72) Erfinder: GOLAVSEK, Samo, 3312 Prebold (SI); OGRIZEK, Darko, 3320 Velenje (SI); POGACAR, Toni, 3311 Sempeter (SI); SEMEJA, Uros, 3327 Smartno Ob Paki (SI)
(86) Internationale Anmeldenummer: PCT/EP2007/055835
(87) Internationale Veröffentlichungsnummer: WO 2008/000624

(56) Entgegenhaltungen:
- DE-A1- 3 942 712
- DE-A1- 4 142 074
- US-A- 5 803 598

## Beschreibung

### Hintergrund der Erfindung

Die vorliegende Erfindung betrifft einen Handrührer gemäß dem Oberbegriff des Anspruchs 1.

### Stand der Technik

Ein solcher Handrührer ist beispielsweise aus der deutschen Offenlegungsschrift DE 3942712 A1 bekannt. Ein Motor ist von einem Gehäuse umschlossen, in dessen vorderem Griffbereich sich ein Motorschalter befindet. Der Motorschalter kann wahlweise in eine Ausschaltstellung, eine Moment-Einschaltstellung und eine von zwei Dauer-Einschaltstellungen gebracht werden. Auf der Unterseite des Gehäuses befindet sich ein Kupplungspaar zum Antrieb zweier Rührbesen. Außerdem ist auf der Vorder- oder Rückseite des Gehäuses eine Kupplung zum alternativen Ankuppeln eines Schnellmixstabs vorgesehen. Aus Sicherheitsgründen soll der Schnellmixstab nur in einer Moment-, nicht jedoch in einer Dauer-Einschaltstellung des Motorschalters betrieben werden. Um deshalb sicherzustellen, dass der Schnellmixstab nicht angeschlossen werden kann, wenn bei gezogenem Netzstecker der Motorschalter unbemerkt noch in Dauer-Einschaltstellung steht, befindet sich die Kupplung für den Schnellmixstab hinter einer Kupplungsöffnung, die mit einem Verschlussschieber so verschließbar ist, dass die Kupplung von außen nicht zugänglich ist. Am Motorschalter ist auf dessen Unterseite ein zapfenförmiger Sperransatz und am Verschlussschieber ein zapfenförmiger Riegelansatz starr befestigt, die durch gegenseitiges Blockieren verhindern, dass der Verschlussschieber geöffnet werden kann, wenn der Motorschalter in seiner Dauer-Einschaltstellung steht. Umgekehrt verhindern Sperransatz und Riegelansatz auch, dass der Motorschalter in die Dauer-Einschaltstellung gebracht werden kann, wenn der Verschlussschieber geöffnet ist.

### Der Erfindung zugrunde liegende Aufgabe

Im Stand der Technik ist der Sperransatz in der Nähe des Verschlussschiebers angeordnet und so ausgebildet, dass er die Bewegung des Riegelansatzes in Öffnungsrichtung des Verschlusses blockieren kann. Dieses Konstruktionsprinzip kann die Konstruktion des Handrührers verkomplizieren und die Gestaltungsmöglichkeiten des Konstrukteurs einschränken. So muss etwa bei der Ausführung des oben beschriebenen bekannten Handrührers, bei dem die Kupplung für den Schnellmixstab und der Verschlussschieber sich auf der Rückseite des Gerätes befinden, der Handgriff des Handrührers so konstruiert sein, dass er Platz für eine Drehstange bietet, die mit dem Motorschalter, der vorne am Handgriff angebracht ist, einstückig verbunden ist und sich durch das Innere des Handgriffs des Handrührers nach hinten erstreckt, wo sie den Sperransatz trägt, der mit dem Riegelansatz des Verschlussschiebers zusammenwirkt. Der Sperransatz muss außerdem tief nach unten in das Gehäuse hineinreichen um einen ausreichend langen Weg des Verschlussschiebers zu blockieren.

Der vorliegenden Erfindung liegt die Aufgabe zugrunde, einen Handrührer gemäß dem Oberbegriff des Anspruchs 1 bereitzustellen, der dem Konstrukteur mehr Gestaltungsspielraum schafft.

### Erfindungsgemäße Lösung

Zur Lösung der Aufgabe lehrt die Erfindung einen Handrührer mit den Merkmalen des Anspruchs 1.

Das mindestens eine gelenkartige Verbindungsmittel kann eine äußere Kraft zum Öffnen des Verschlusses und eine Bewegung des Verschlusses in Öffnungsrichtung in eine anders gerichtete Kraft und Bewegung des Sperrelements umwandeln. Dadurch können Lage und Bewegungsrichtung des Sperrelements unabhängig von der Lage und Öffnungsrichtung des Verschlusses gewählt werden. Das kann eine einfachere, preiswertere und von außen ansprechendere Konstruktion des Handrührers ermöglichen. Ein weiterer erreichbarer Vorteil ist, dass das Gegensperrelement nicht mehr in der Nähe des Verschlusses angeordnet werden muss, um das mit dem Verschluss verbundene Sperrelement zu blockieren. Ein weiterer erreichbarer Vorteil ist, dass das Gegensperrelement des Motorschalters nicht tief in das Gehäuse hineinreichen muss, um das mit dem Verschluss verbundene Sperrelement zu blockieren.

Die Erfindung erleichtert es, einen Handrührer zu konstruieren, bei dem aus Sicherheitsgründen eine Kupplung für einen Schnellmixstab unzugänglich ist, wenn der Motorschalter in seiner Dauer-Einschaltstellung steht. Insbesondere erleichtert sie die Konstruktion eines Handrührers, der verhindert, dass der Schnellmixstab angeschlossen wird, wenn bei gezogenem Netzstecker der Motorschalter unbemerkt noch in seiner Dauer-Einschaltstellung steht. Außerdem erleichtert die Erfindung die Konstruktion eines Handrührers, der verhindert, dass ein Benutzer sich, wenn das Gerät sich im Dauerbetrieb befindet, dadurch verletzt, dass er versehentlich in die Kupplung für den Schnellmixstab greift.

### Bevorzugte Ausgestaltung der Erfindung

Vorteilhafte Aus- und Weiterbildungen, welche einzeln oder in Kombination miteinander eingesetzt werden können, sind Gegenstand der Unteransprüche.

In einer bevorzugten Ausführung der Erfindung setzt das mindestens eine gelenkartige Verbindungsmittel ein von Außen in eine Öffnungsrichtung des Verschlusses aufgebrachte Kraft in eine Kraft auf das Sperrelement um. Die Richtung der auf das Sperrelement wirkenden Kraft verläuft vorzugsweise im Wesentlichen senkrecht zur Öffnungsrichtung. Ein bevorzugtes Sperrelement ist eine flache Zunge, die sich beim Öffnen des Verschlusses unterhalb des Motorschalters in Längsrichtung des Gehäuses bewegt.

Vorzugsweise weist das Verbindungsmittel ein am Verschluss befestigtes Drehgelenk auf, um eine äußere Kraft auf und eine Bewebung des Verschlusses in Öffnungsrichtung in eine anders gerichtete Kraft auf und eine andersgerichtete Bewegung des Sperrelements umzuwandeln. Zusätzlich oder alternativ zum Drehgelenk umfasst das Verbindungsmittel vorzugsweise ein lang gestrecktes, senkrecht zu seiner Längsrichtung biegbares, vorzugsweise elastisches Element, zum Beispiel ein flaches Kunststoffband, einen Draht oder eine Drahtspirale. Das Verbindungsmittel ist vorzugsweise an einer, besonders vorzugsweise mehreren Stellen geführt und ausreichend steif, um die verschlussseitige Kraft und Bewegung sicher in eine sperrelementseitige Kraft und Bewegung umzusetzen. Vorzugsweise bildet das Ende des Verbindungsmittels in der Nähe des Motorschalters das Sperrelement, das mit dem Gegensperrelement des Motorschalters zusammenwirkt.

Wenn der Motorschalter in der Dauer-Einschaltstellung steht, wirkt das Sperrelement vorzugsweise so mit dem Gegensperrelement zusammen, dass die Kraft am Sperrelement eine Gegenkraft hervorruft, die über das Verbindungsmittel zurück auf den Verschluss übertragen wird. Das Gegensperrelement ist vorzugsweise ein Vorsprung, der besonders vorzugsweise mit dem Motorschalter einteilig gebildet ist. Wenn der Motorschalter in Dauer-Einschaltstellung gebracht wird, gelangt das Gegensperrelement vorzugsweise senkrecht zur Bewegungsrichtung des Sperrelements in dessen Bewegungsbahn, um die Bewegung des Sperrelements zu blockieren. Wenn eine Kraft auf den Verschluss ausgeübt wird, um ihn zu öffnen, stößt das Sperrelement vorzugsweise gegen das Gegensperrelement und verursacht so die Gegenkraft, die durch das Verbindungsmittel zurück auf den Verschluss übertragen wird.

Vorzugsweise ist der Verschluss durch die Gegenkraft in eine Sperrstellung bewegbar, von der aus er nicht geöffnet werden kann. Dadurch, dass der Verschluss in die Sperrstellung bewegbar ist, muss die Kraft, mit der ein Benutzer versucht, den Verschluss trotz Dauer-Einschaltstellung des Motorschalters zu öffnen, nicht alleine vom Gegensperrelement über das Sperrelement und Verbindungselement aufgenommen werden, sondern wird wenigstens teilweise von Sperrmitteln in der Sperrstellung aufgenommen. Dies kann dazu beitragen, dass der Verschluss auch dann standhält und/oder kein Schaden am Handrührer entsteht, wenn der Benutzer mit größerer Kraft am Verschluss zieht oder drückt.

In einer bevorzugten Ausführung der Erfindung ist der Verschluss als Verschlussschieber ausgebildet. Vorzugsweise kann die Kupplungsöffnung durch Schieben des Verschlussschiebers nach oben geöffnet werden. Hierzu ist vorzugsweise am unteren Ende des Verschlussschiebers eine Aussparung vorgesehen, in die der Benutzer eingreifen kann.

Vorzugsweise weisen von Verschlussschieber und Gehäuse das eine eine Sperrkante und das andere eine Verriegelungsnase als Sperrmittel auf, sodass die Verriegelungsnase in Sperrstellung an die Sperrkante angreift, um ein Verschieben des Verschlussschiebers in Öffnungsrichtung zu verhindern. Die Sperrkante verläuft vorzugsweise senkrecht zur Öffnungsrichtung und bildet besonders vorzugsweise einen Teil eines Ausschnitts auf einer Seite des Verschlussschiebers. Die Verriegelungsnase ist vorzugsweise so am Gehäuse angebracht, dass die Sperrkante des Verschlussschiebers an der Verriegelungsnase vorbei gleitet, wenn durch das Verbindungselement keine Gegenkraft auf den Verschlussschieber ausgeübt wird. Wird jedoch durch das Verbindungselement eine Kraft auf den Verschlussschieber ausgeübt, wird dieser beim Versuch, ihn zu öffnen, in Richtung der Verriegelungsnase bewegt, sodass die Verriegelungsnase an die Sperrkante angreift und ein weiteres Öffnen des Verschlussschiebers verhindert.

In einer bevorzugten Ausführung der Erfindung wirken das Sperrelement und das Gegensperrelement außerdem so zusammen, dass bei geöffnetem Verschluss der Motorschalter nicht in seine Dauer-Einschaltstellung gebracht werden kann. Dazu ist das Sperrelement vorzugsweise mit dem Verschluss in der Weise mechanisch verbunden, dass es sich, wenn der Motorschalter nicht in Dauer-Einschaltstellung steht, beim Öffnen des Verschlusses in eine Bewegungsbahn des Gegensperrelements bewegt, sodass bei geöffnetem Verschluss der Motorschalter nicht in die Dauer-Einschaltstellung gebracht werden kann.

Das bevorzugte Sperrelement ist eine flache Zunge, die sich beim Öffnen des Verschlusses unterhalb des Motorschalters in Längsrichtung des Gehäuses bewegt. Dazu setzt das mindestens eine gelenkartige Verbindungsmittel eine Bewegung des Verschlussschiebers in eine Öffnungsrichtung in eine Bewegung des Sperrelements um, wenn der Motorschalter nicht in Dauer-Einschaltstellung steht. Die Bewegung des Sperrelements verläuft vorzugsweise im Wesentlichen senkrecht zur Öffnungsrichtung. Diese Ausführungsform der Erfindung erleichtert es, einen Handrührer zu konstruieren, bei dem aus Sicherheitsgründen ein an der zweiten Kupplungseinrichtung angekuppeltes Werkzeug nur in der Moment-Einschaltstellung des Motorschalters betrieben werden kann.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: einen Aufriss eines erfindungsgemäßen Handrührers mit Gehäuse, Motorschal- ter, Sperr- und Gegensperrelement, Verbindungselement und Verschlussschie- ber;
- Fig. 2:: ein Detail des Motorschalters mit Gegensperrelement und Sperrelement, wenn der Motorschalter nicht in Dauer-Einschaltstellung ist;
- Fig. 3:: ein Detail des Motorschalters mit Gegensperrelement und Sperrelement, wenn der Motorschalter in Dauer-Einschaltstellung ist;
- Fig. 4:: ein Detail des Verschlussschiebers beim Öffnen, wenn der Motorschalter nicht in Dauer-Einschaltstellung ist; und
- Fig. 5:: ein Detail des Verschlussschiebers in Sperrstellung, wenn der Motorschalter in Dauer-Einschaltstellung ist.

### Ausführliche Beschreibung eines Ausführungsbeispiels

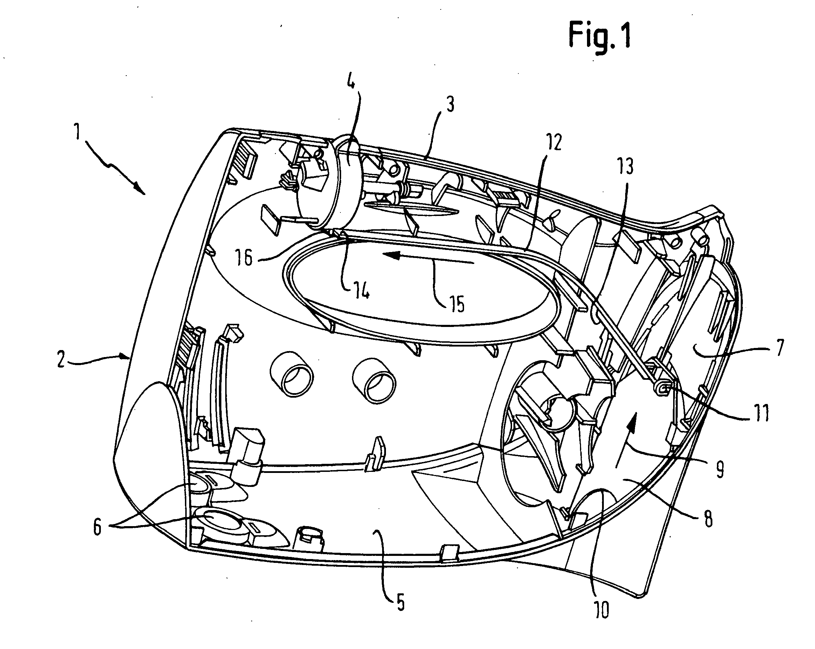

Die Aufrissdarstellung eines erfindungsgemäßen Handrührers 1 in Fig. 1 zeigt das Gehäuse 2 mit einem Griff 3, in dessen vorderem Bereich ein zylinderförmiger Drehschalter 4 als Motorschalter zum Ansteuern des nicht dargestellten Motors angeordnet ist. Der Drehschalter 4 kann in eine Ausschaltstellung, eine Moment-Einschaltstellung und mehrere Dauer-Einschaltstellungen für unterschiedliche Drehgeschwindigkeiten des Motors gebracht werden. Im Gehäuseboden 5 befinden sich zwei Öffnungen 6, durch die von außen ein Paar Werkzeuge, z.B. Rührbesen, an nicht dargestellte Kupplungseinrichtungen angekuppelt werden können. Eine weitere nicht dargestellte Kupplungseinrichtung ist durch eine Öffnung in der Gehäuserückseite 7 zum Ankuppeln eines weiteren Werkzeugs, z.B. eines Mixfußes, zugänglich, wenn die Öffnung nicht, wie in Fig. 1, durch einen Verschlussschieber 8 verschlossen ist. Zum Öffnen muss der Benutzer den Verschlussschieber 8 von außen in Öffnungsrichtung 9 bewegen. Damit der Benutzer den Verschlussschieber 8 angreifen kann, ist eine Eingriffsöffnung 10 im Verschlussschieber 8 vorgesehen.

Der Verschlussschieber 8 ist mit einem Verbindungselement, das ein Drehgelenk 11 und ein lang gestrecktes flaches Kunststoffband 12 umfasst, verbunden. Das Kunststoffband 12 ist in einem dem Drehgelenk 11 zugewandten Teil durch eine Rippe 13 versteift. In einem dem Drehschalter 4 zugewandten Teil ist das Kunststoffband 12 senkrecht zu seiner Längserstreckung elastisch biegbar. Das Ende des Kunststoffbands 12 in der Nähe des Drehschalters 4 bildet ein Sperrelement 14. Durch das Verbindungselement wird eine äußere Kraft zum Öffnen des Verschlusses 8 und eine Bewegung des Verschlusses 8 in Öffnungsrichtung 9 in eine Kraft und Bewegung des Sperrelements 14 umgesetzt die im Wesentlichen in eine Richtung 15 senkrecht dazu verläuft.

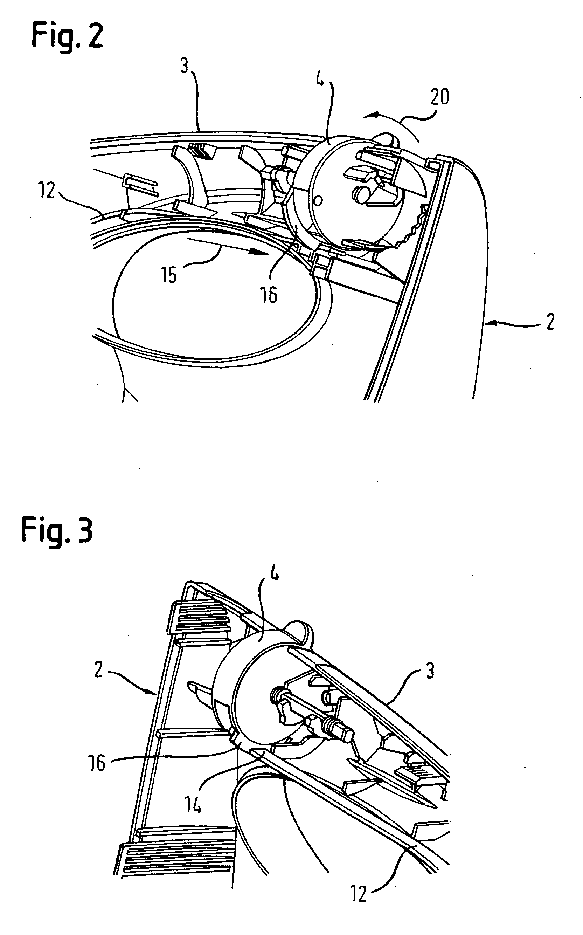

Der Drehschalter 4 weist auf seiner Unterseite ein Gegensperrelement 16 auf. Steht der Schalter 4 nicht in Dauer-Einschaltstellung, wie in Fig. 2 dargestellt, kann sich das Sperrelement 14 ungehindert am Gegensperrelement 16 vorbei in Gehäuselängsrichtung 15 bewegen, wenn der Verschlussschieber 8 in Öffnungsrichtung 9 geöffnet wird. Steht der Drehschalter 4 hingegen in Dauer-Einschaltstellung, wie in Fig. 3 dargestellt, stößt das Sperrelement 14 auf das Gegensperrelement 16, sobald der Benutzer versucht, den Verschlussschieber 8 zu öffnen. Die Kraft, mit der das Sperrelement 14 vermittels des Verbindungselements an das Gegensperrelement 16 gedrückt wird, verursacht eine Gegenkraft, die durch das Verbindungselement zurück auf den Verschlussschieber 8 wirkt.

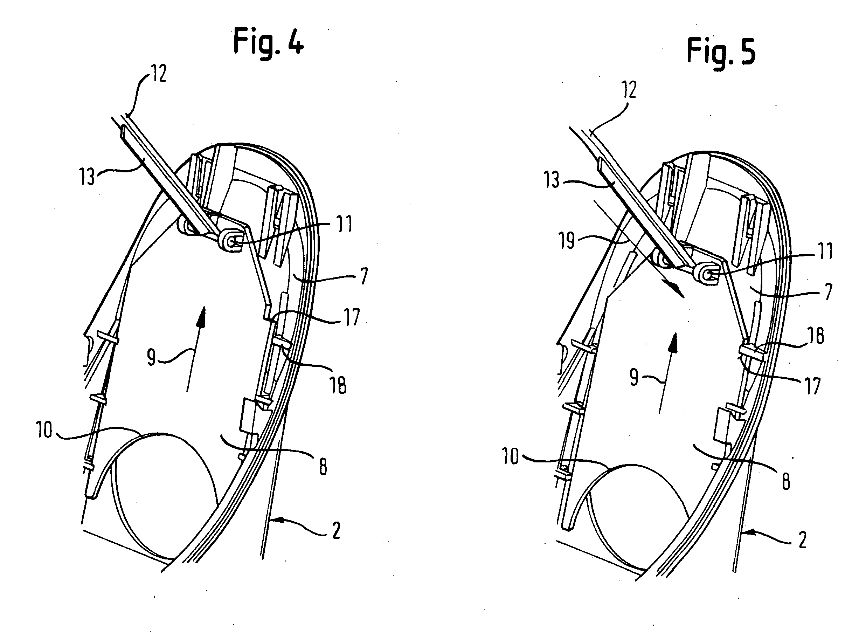

Der Verschlussschieber 8 ist mit einer Sperrkante 17 und die Gehäuserückseite 7 mit einer Verriegelungsnase 18 versehen. Wenn sich das Sperrelement 14 ungehindert am Gegensperrelement 16 vorbeibewegen kann, gleitet die Sperrkante 17 des Verschlussschiebers 8 vor der Verriegelungsnase 18 vorbei in Öffnungsrichtung 9, wie in Fig. 4 dargestellt. Wenn hingegen in Dauer-Einschaltstellung des Schalters 4 das Sperrelement 14 gegen das Gegensperrelement 16 stößt, wirkt eine Gegenkraft in Angreifrichtung 19 des Verbindungsmittels auf den Verschlussschieber 8. Dieser wird dadurch in Richtung Gehäuserückseite 7 gedrückt, sodass die Verriegelungsnase 18 nun an die Sperrkante 17 angreifen kann. Hierdurch wird eine weitere Bewegung des Verriegelungsschiebers 8 in Öffnungsrichtung 9 unterbunden.

Wie nun wieder am besten in Fig. 2 zu sehen, kann der Drehschalter 4 nicht in Richtung des Pfeils 20 in Dauer-Einschaltstellung gebracht werden, wenn der Verschlussschieber 8 zum Freigeben der Kupplungsöffnung nach oben geschoben ist, weil dann das Speerelement 14 sich in Richtung des Pfeils 15 bewegt hat und unter dem Drehschalter 4 in der Bahn des Gegensperrelements 16 liegt. Erst wenn durch Schließen des Verschlussschiebers 8 das Sperrelement 14 wieder aus dem Weg gebracht worden ist, kann das Gegensperrelement 16 sich wieder frei bewegen und der Drehschalter 4 in Dauer-Einschaltstellung gebracht werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die vorliegende Erfindung erleichtert vorteilhaft die Konstruktion eines Handrührers 1, bei dem aus Sicherheitsgründen die zweite Kupplungseinrichtung für das Ankuppeln eines Schellmixstabs unzugänglich ist, wenn der Motorschalter 4 in seiner Dauer-Einschaltstellung steht.

## Patentansprüche

1. Handrührer (1), der umfasst: ein Gehäuse (2), einen Motor, einen Motorschalter (4) mit einer Ausschaltstellung, einer Moment-Einschaltstellung und mindestens einer Dauer-Einschaltstellung, mindestens eine erste Kupplungseinrichtung zum Ankuppeln eines Werkzeugs, um es in der Dauer-Einschaltstellung anzutreiben, eine zweite Kupplungseinrichtung zum Ankuppeln eines Werkzeugs, um es in der Moment-Einschaltstellung anzutreiben, eine Kupplungsöffnung, die so mit einem Verschluss (8) ausgestattet ist, das die zweite Kupplungseinrichtung nur bei geöffnetem Verschluss (8) zum Ankuppeln eines Werkzeugs zugänglich ist, und ein Sperrelement (14), das mit dem Verschluss (8) mechanisch verbunden ist und mit einem Gegensperrelement (16) des Motorschalters (4) so zusammenwirkt, dass der Verschluss (8) nicht geöffnet werden kann, wenn der Motorschalter (4) sich in der Dauer-Einschaltstellung befindet, **dadurch gekennzeichnet, dass** das Sperrelement (14) über mindestens ein gelenkartiges Verbindungsmittel (11, 12) mit dem Verschluss (8) verbunden ist.

2. Handrührer (1) nach Anspruch 1, **dadurch gekennzeichnet, dass** das mindestens eine gelenkartige Verbindungsmittel (11, 12) eine von Außen in eine Öffnungsrichtung (9) des Verschlusses (8) aufgebrachte Kraft in eine Kraft auf das Sperrelement (14) umsetzt.

3. Handrührer (1) nach Anspruch 2, **dadurch gekennzeichnet, dass** die Richtung der auf das Sperrelement (14) wirkenden Kraft im Wesentlichen senkrecht zur Öffnungsrichtung (9) des Verschlusses (8) verläuft.

4. Handrührer (1) nach einem der vorherigen Ansprüche, **dadurch gekennzeichnet, dass** das Verbindungsmittel (11, 12) ein am Verschluss (8) befestigtes Drehgelenk (11) aufweist.

5. Handrührer (1) nach einem der vorherigen Ansprüche, **dadurch gekennzeichnet, dass** das Verbindungsmittel (11, 12) ein lang gestrecktes, senkrecht zu seiner Längsrichtung biegbares Element (12) umfasst.

6. Handrührer (1) nach einem der Ansprüche 2 bis 5, **dadurch gekennzeichnet, dass** wenn der Motorschalter (4) in der Dauer-Einschaltstellung steht, das Sperrelement (14) so mit dem Gegensperrelement (16) des Motorschalters (4) zusammenwirkt, dass die Kraft auf das Sperrelement (14) eine Gegenkraft hervorruft, die über das Verbindungsmittel (11, 12) zurück auf den Verschluss (8) übertragen wird.

7. Handrührer (1) nach Anspruch 6, **dadurch gekennzeichnet, dass** der Verschluss (8) durch die Gegenkraft in eine Sperrstellung bewegbar ist, von der aus er nicht geöffnet werden kann.

8. Handrührer (1) nach einem der vorherigen Ansprüche, **dadurch gekennzeichnet, dass** der Verschluss (8) als Verschlussschieber ausgebildet ist.

9. Handrührer (1) nach Anspruch 8, **dadurch gekennzeichnet, dass** von Verschlussschieber und Gehäuse das eine eine Sperrkante (17) und das andere eine Verriegelungsnase (18) aufweist, sodass die Verriegelungsnase (18) in Sperrstellung an die Sperrkante (17) angreift, um ein Verschieben des Verschlussschiebers in Öffnungsrichtung (9) zu verhindern.

10. Handrührer (1) nach einem der vorherigen Ansprüche, **dadurch gekennzeichnet, dass** das Sperrelement (14) und das Gegensperrelement (16) so zusammenwirken, dass bei geöffnetem Verschluss (8) der Motorschalter (4) nicht in die Dauer-Einschaltstellung gebracht werden kann.

11. Handrührer (1) nach Anspruch 10, **dadurch gekennzeichnet, dass** das Sperrelement (14) so mit dem Verschluss (8) mechanisch verbunden ist, dass es sich, wenn der Motorschalter (4) nicht in Dauer-Einschaltstellung steht, beim Öffnen des Verschlusses (8) so in eine Bewegungsbahn des Gegensperrelements (16) bewegt, dass bei geöffnetem Verschluss (8) der Motorschalter (4) nicht in die Dauer-Einschaltstellung gebracht werden kann.

12. Handrührer (1) nach Anspruch 10 oder 11, **dadurch gekennzeichnet, dass** wenn der Motorschalter (4) nicht in Dauer-Einschaltstellung steht, das mindestens eine gelenkartige Verbindungsmittel (11, 12) eine Bewegung des Verschlussschiebers in eine Öffnungsrichtung (9) in eine im Wesentlichen senkrecht zur Öffnungsrichtung (9) verlaufende Bewegung des Sperrelements (14) umsetzt.

## Claims

1. Hand mixer (1) comprising: a housing (2), a motor, a motor switch (4) with a switch-off setting, a momentary switch-on setting and at least one continuous switch-on setting, at least one first coupling device for coupling a tool in order to drive it in the continuous switch-on setting, a second coupling device for coupling a tool in order to drive it in the momentary switch-on setting, a coupling opening which is so equipped with a lock (8) that the second coupling device is accessible for coupling of a tool only when the lock (8) is open and a blocking element (14) which is mechanically connected with the lock (8) and so co-operates with a counter-blocking element (16) of the motor switch (4) that the lock (8) cannot be opened when the motor switch (4) is in the continuous switch-on setting, **characterised in that** the blocking element (14) is connected with the lock (8) by way of at least one articulated connecting means (11, 12).

2. Hand mixer (1) according to claim 1, **characterised in that** the at least one articulated connecting means (11, 12) converts a force, which is exerted from outside in an opening direction (9) of the lock (8), into a force on the blocking element (14).

3. Hand mixer (1) according to claim 2, **characterised in that** the direction of the force acting on the blocking element (14) extends substantially perpendicularly to the direction (9) of opening of the lock (8).

4. Hand mixer (1) according to any one of the preceding claims, **characterised in that** the connecting means (11, 12) comprises a rotary joint (11) fastened to the lock (8).

5. Hand mixer (1) according to any one of the preceding claims, **characterised in that** the connecting means (11, 12) comprises an elongate element (12) bendable perpendicularly to its longitudinal direction.

6. Hand mixer (1) according to any one of claims 2 to 5, **characterised in that** if the motor switch (4) is in the continuous switch-on setting the blocking element (14) so co-operates with the counter-blocking element (16) of the motor switch (4) that the force on the blocking element (14) produces a counter-force which is transmitted by way of the connecting means (11, 12) back to the lock (8).

7. Hand mixer (1) according to claim 6, **characterised in that** the lock (8) is movable by the counter-force into a blocking setting from which it cannot be opened.

8. Hand mixer (1) according to any one of the preceding claims, **characterised in that** the lock (8) is constructed as a lock slide.

9. Hand mixer (1) according to claim 8, **characterised in that** of lock slide and housing one has a blocking edge (17) and the other a locking lug (18) so that the locking lug (18) in blocking setting engages the blocking edge (17) in order to prevent displacement of the lock slide in the opening direction (9).

10. Hand mixer (1) according to any one of the preceding claims, **characterised in that** the blocking element (14) and the counter-blocking element (16) so co-operate that when the lock (8) is open the motor switch (4) cannot be brought into the continuous switch-on setting.

11. Hand mixer (1) according to claim 10, **characterised in that** the blocking element (14) is so mechanically connected with the lock (8) that, when the motor switch (4) is not in the continuous switch-on setting, it so moves into a movement path of the counter-blocking element (16) during opening of the lock (8) that with the lock (8) opened the motor switch (4) cannot be brought into the continuous switch-on setting.

12. Hand mixer (1) according to claim 10 or 11, **characterised in that** if the motor switch (4) is not in the continuous switch-on setting the at least one articulated connecting means (11, 12) converts a movement of the lock slide in an opening direction (9) into a movement of the blocking element (14) substantially perpendicular to the opening direction (9).

## Revendications

1. Batteur à main (1) qui comprend : un boîtier (2), un moteur, un contacteur de moteur (4) ayant une position d'interruption, une position d'enclenchement instantané et au moins une position d'enclenchement permanent, au moins un premier dispositif de couplage destiné à accoupler un outil afin de l'entraîner en position d'enclenchement permanent, un second dispositif de couplage destiné à accoupler un outil afin de l'entraîner en position d'enclenchement instantané, une ouverture de couplage qui est conçue avec un dispositif de fermeture (8) de manière à ce que le second dispositif de couplage soit accessible pour le couplage d'un outil, seulement lorsque le dispositif de fermeture (8) est ouvert, et un élément de blocage (14) qui est raccordé mécaniquement au dispositif de fermeture (8) et agit avec un contre-élément de blocage (16) du contacteur de moteur (4) de manière à ce que le dispositif de fermeture (8) ne puisse pas être ouvert lorsque le contacteur de moteur (4) se trouve en position d'enclenchement permanent, **caractérisé en ce que** l'élément de blocage (14) est raccordé au dispositif de fermeture (8) par l'intermédiaire d'au moins un moyen de liaison articulé (11, 12).

2. Batteur à main (1) selon la revendication 1, **caractérisé en ce que** l'au moins un moyen de liaison articulé (11, 12) convertit une force appliquée de l'extérieur dans un sens d'ouverture (9) du dispositif de fermeture (8) en une force agissant sur l'élément de blocage (14).

3. Batteur à main (1) selon la revendication 2, **caractérisé en ce que** le sens de la force agissant sur l'élément de blocage (14) passe essentiellement perpendiculairement au sens d'ouverture (9) du dispositif de fermeture (8).

4. Batteur à main (1) selon l'une quelconque des revendications précédentes, **caractérisé en ce que** le moyen de liaison (11, 12) présente une articulation pivotante (11) fixée sur le dispositif de fermeture (8).

5. Batteur à main (1) selon l'une quelconque des revendications précédentes, **caractérisé en ce que** le moyen de liaison (11, 12) comprend un élément (12) allongé pliable perpendiculairement à son sens longitudinal.

6. Batteur à main (1) selon l'une quelconque des revendications 2 à 5, **caractérisé en ce que**, lorsque le contacteur de moteur (4) se trouve en position d'enclenchement permanent, l'élément de blocage (14) agit avec le contre-élément de blocage (16) du contacteur de moteur (4) de manière à ce que la force agissant sur l'élément de blocage (14) provoque une force de réaction qui est transmise en retour sur le dispositif de fermeture (8) par l'intermédiaire du moyen de liaison (11, 12).

7. Batteur à main (1) selon la revendication 6, **caractérisé en ce que** le dispositif de fermeture (8) est déplaçable par la force de réaction dans une position de blocage, depuis laquelle il ne peut pas être ouvert.

8. Batteur à main (1) selon l'une quelconque des revendications précédentes, **caractérisé en ce que** le dispositif de fermeture (8) est réalisé comme coulisse de fermeture.

9. Batteur à main (1) selon la revendication 8, **caractérisé en ce que** la coulisse de fermeture présente un bord de blocage (17) et le boîtier présente un ergot de verrouillage (18), de sorte que l'ergot de verrouillage (18), en position de blocage, a prise sur le bord de blocage (17) afin d'empêcher un coulissement de la coulisse de fermeture dans le sens d'ouverture (9).

10. Batteur à main (1) selon l'une quelconque des revendications précédentes, **caractérisé en ce que** l'élément de blocage (14) et le contre-élément de blocage (16) coopèrent de manière à ce que, lorsque le dispositif de fermeture (8) est ouvert, le contacteur de moteur (4) ne puisse pas être mis dans la position d'enclenchement permanent.

11. Batteur à main (1) selon la revendication 10, **caractérisé en ce que** l'élément de blocage (14) est raccordé mécaniquement au dispositif de fermeture (8) de manière à ce que, lorsque le contacteur de moteur (4) ne se trouve pas en position d'enclenchement permanent, il se déplace, à l'ouverture du dispositif de fermeture (8), dans une voie de déplacement du contre-élément de blocage (16) de manière à ce que, lorsque le dispositif de fermeture (8) est ouvert, le contacteur de moteur (4) ne puisse pas être mis dans la position d'enclenchement permanent.

12. Batteur à main (1) selon la revendication 10 ou 11, **caractérisé en ce que**, lorsque le contacteur de moteur (4) ne se trouve pas en position d'enclenchement permanent, l'au moins un moyen de liaison articulé (11, 12) convertit un mouvement de la coulisse de fermeture dans un sens d'ouverture (9) en un mouvement de l'élément de blocage (14) s'étendant essentiellement perpendiculairement au sens d'ouverture (9).
